(19) Europäisches Patentamt
European Patent Office
Office européen des brevets

(11) Veröffentlichungsnummer: **0 003 321**
**B1**

(12) # EUROPÄISCHE PATENTSCHRIFT

(45) Veröffentlichungstag der Patentschrift: **25.11.81**

(21) Anmeldenummer: **79100141.5**

(22) Anmeldetag: **18.01.79**

(51) Int. Cl.³: **B 01 J 31/02**, C 08 F 4/62, C 08 F 10/00

(54) **Verfahren zur Herstellung eines Katalysators und seine Verwendung zum Polymerisieren von 1-Olefinen.**

(30) Priorität: **23.01.78 DE 2802819**

(43) Veröffentlichungstag der Anmeldung:
**08.08.79 Patentblatt 79/16**

(45) Bekanntmachung des Hinweises auf die Patenterteilung:
**25.11.81 Patentblatt 81/47**

(84) Benannte Vertragsstaaten:
**BE DE FR GB IT NL**

(56) Entgegenhaltungen:
**DE - A - 2 118 366**
**FR - A - 2 192 121**
**GB - A - 1 415 649**

(73) Patentinhaber: **HOECHST AKTIENGESELLSCHAFT**
**Postfach 80 03 20**
**D-6230 Frankfurt/Main 80 (DE)**

(72) Erfinder: **Gutweiler, Klemens, Dr.**
**Hartemussweg 10**
**D-6272 Niedernhausen/Taunus (DE)**

**EP 0 003 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung eines Katalysators une seine Verwendung zum Polymerisieren von 1-Olefinen

Die Erfindung betrifft ein Verfahren zur Herstellung eines Mischkatalysators vom Ziegler-Typ und den nach diesem Verfahren hergestellten Katalysator.

Es ist ein Verfahren zum Polymerisieren von 1-Olefinen bekannt, bei welchem ein Katalysator verwendet wird, der aus einem auf einem Träger fixierten Chromatester und einer aluminiumorganischen Verbindung besteht (vgl. DE—OS 2 000 031). Die nach diesem Verfahren erzielbaren Ausbeuten reichen jedoch noch nicht aus, um das Polymere ohne Entfernung der Katalysatorreste weiterverarbeiten zu können.

Weiterhin ist ein Verfahren zur Polymerisation von Ethylen beschrieben worden, bei welchem der Katalysator aus einem auf einem $SiO_2$-Träger niedergeschlagenen und mit einer Phenolverbindung behandelten Chromatester und einem starken Reduktionsmittel besteht (vgl. DE—OS 2 713 877). Obwohl durch die Phenolbehandlung die Ausbeute gesteigert wird, ist sie dennoch nicht ausreichend für ein Polymerisationsverfahren ohne Katalysatorentfernung aus dem Polymer.

Es wurde nun gefunden, daß sehr hohe Ausbeuten an Polymer erhalten werden, wenn man einen Katalysator verwendet, zu dessen Herstellung man einen Chromatester auf einem Träger fixiert, mit einem Titanester in Abwesenheit eines ungesättigten polymerisierbaren Kohlenwasserstoffes vorbehandelt (Komponente A) und mit einer aluminiumorganischen Verbindung (Komponente B) aktiviert.

Unmittelbarer Gegenstand der Erfindungs ist somit ein Verfahren zur Herstellung eines Katalysators durch Aufbringen eines Chromatesters auf ein Oxid oder Mischoxid des Siliciums und/oder Aluminiums und Mischen des Reaktionsproduktes (Komponente A) mit einer aluminiumorganischen Verbindung (Komponente B), dadurch gekennzeichnet, daß man zur Herstellung der Komponente A einen Chromatester der Formel

$$(RO)_2CrO_2,$$

worin R eine tertiäre Alkyl- oder Aralkylgruppe mit 4 bis 24 Kohlenstoffatomen bedeutet, auf ein Oxid oder Mischoxid des Siliciums und/oder Aluminiums aufbringt und in Abwesenheit eines ungesättigten polymerisierbaren Kohlenwasserstoffes mit einer Titanverbindung der Formel

$$Ti(OR^4)_4,$$

worin $R^4$ einen geradkettigen oder verzweigten Alkylrest mit 1 bis 12 Kohlenstoffatomen bedeutet, im Verhältnis Cr:Ti von 1:1 bis 1:10 behandelt.

Weiterhin ist unmittelbarer Gegenstand der Erfindung die Verwendung des nach diesem Verfahren hergestellten Katalysators zum Polymerisieren von 1-Olefinen.

Zur Herstellung des Katalysators wird zunächst ein Chromatester auf einem Träger fixiert.

Geeignete Chromatester sind solche der Formel

$$(RO)_2CrO_2,$$

worin R eine tertiäre Alkyl- oder Aralkylgruppe mit 4 bis 24, vorzugsweise 4 bis 10 Kohlenstoffatomen bedeutet. Diese Chromatester entstehen in an sich bekannter Weise durch Umsetzung eines tertiären Alkohols der Formel

$$R^1R^2R^3COH,$$

worin $R^1$, $R^2$ und $R^3$ gleiche oder verschiedene Alkylreste mit 1 bis 15 Kohlenstoffatomen oder Arylreste mit 6 bis 10 Kohlenstoffatomen bedeuten, mit $CrO_3$ in einem inerten Lösungsmittel in Gegenwart eines wasserbindenden Mittels. Als Alkohole kommen in Frage t-Butanol, 2-Methyl-2-butanol, t-Hexanol, Dimethylpentadecylcarbinol, Triphenylcarbinol. Besonders bevorzugt wird t-Butanol verwendet. Das Molverhältnis $CrO_3$ au Alkohol beträgt 1:1 bis 10:1, vorzugsweise 2:1 bis 4:1.

Als Lösungsmittel eignen sich alle für die Ziegler-Polymerisation verwendbaren Lösungsmittel, so z.B. aliphatische oder cycloaliphatische Kohlenwasserstoffe, beispielsweise Pentan, Hexan, Heptan, Cyclohexan, Methylcyclohexan, aromatische Kohlenwasserstoffe wie Benzol, Toluol, Xylol oder Benzin- bzw. hydrierte Dieselölfraktionen, welche sorgfältig von Sauerstoff, Schwefelverbindungen und Feuchtigkeit befreit worden sind. Bevorzugt werden aliphatische und cycloaliphatische Kohlenwasserstoffe verwendet.

Die Konzentration des $CrO_3$ in der Lösung beträgt zweckmäßigerweise 1 bis 30 mMol, vorzugsweise 5 bis 20 mMol pro Liter. Bei höheren Konzentrationen besteht die Gefahr der Zersetzung und Ausflocken des Chromatesters, insbesondere in Gegenwart von Licht.

Die Umsetzung erfolgt bei einer Temperature von 0 bis 40°C, vorzugsweise bei 15 bis 25°C und dauert 1 min bis 360 min je nach Temperatur. Danach wird von dem wasserbindenden Mittel, welches

vorzugsweise wasserfreies Magnesiumsulfat ist, und dem überschüssigem $CrO_3$ abfiltriert.

Geeignete Träger sind poröse Oxide oder Mischoxide des Siliciums und/oder Aluminiums, die eine spezifische Oberfläche von 50 bis 1000, vorzugsweise von 100 bis 800, insbesondere von 150 bis 650 $m^2/g$ aufweisen und deren Porenvolumen im Bereich von 0,2 bis 3, vorzugsweise von 0,4 bis 3, insbesondere von 0,6 bis 2,7 ml/g liegen. Die Teilchengröße beträgt 1 bis 500 $\mu$m, vorzugsweise 10 bis 200 $\mu$m, insbesondere 20 bis 100 $\mu$m. Die Hydroxylgruppenzahl liegt, je nach der spezifischen Oberfläche und der Temperaturvorbehandlung im Bereich von 0,5 bis 50, vorzugsweise von 1 bis 20, insbesondere von 1,5 bis 10 mMol Hydroxylgruppen pro Gramm Träger. Solche Oxide werden teilweise speziell im Hinblick auf eine Verwendung als Träger für Trägerkatalysatoren hergestellt und sind im Handel erhältlich.

Vor der Umsetzung des Trägers mit der Chromverbindung muß durch Trocknen bei einer Temperature von 120 bis 800°C, vorzugsweise 200 bis 500°C, adsorptive gebundenes Wasser entfernt werden. Nach der Trocknung wird der Träger unter Luft- und Wasserausschluß unter einem Inertgas, beispielsweise Stickstoff oder Argon, gelagert.

Die Umsetzung des Trägers mit der Chromverbindung erfolgt in der Weise, daß man der Träger in einem inerten Verdünnungsmittel suspendiert, die gelöste Chromverbindung bei einer Temperatur von 0 bis 40°C, vorzugsweise von 15 bis 25°C, zugibt und noch 1 bis 360 Minuten einwirken läßt. Das Verhältnis von Chromverbindung zu dem Träger wird so gewählt, daß 1 bis 40, vorzugsweise 2 bis 25 mMol Chromatester pro 100 Gramm des Trägers eingesetzt werden. Dabei zieht die Chromverbindung quantitativ auf den Träger auf. Die Umsetzung ist beendet, wenn nach Absitzen des Trägers in der überstehenden Lösung kein Chrom mehr nachweisbar ist.

Danach wird die auf dem Träger fixierte Chromverbindung in der gleichen Suspension in Abwesenheit eines ungesättigten polymerisierbaren Kohlenwasserstoffs mit einer vierwertigen Titanverbindung zur Reaktion gebracht. Diese Titanverbindung is eine der Formel $Ti(OR^4)_4$, worin $R^4$ einen geradkettigen oder verzweigten Alkylrest mit 1 bis 12, vorzugsweise 3 bis 8 Kohlenstoffatomen bedeutet und die Reste $R^4$ gleich oder verschieden sein können. Beispiele sind Ethyl-, i-Propyl-, n-Propyl-, n-Butyl-, i-Butyl-, t-Butyl-, Auryl-, Octyl- und Dodecyltitanat-(IV). Bevorzugt verwendet wird Isopropyltitanat-(IV).

Die Umsetzung der auf dem Träger fixierten Chromverbindung mit der Titanverbindung findet, wie schon ausgeführt, in demselben Lösungsmittel statt wie die Bildung des Chromatesters. Die Konzentration der Chromverbindung beträgt 1 bis 30, vorzugsweise 5 bis 20 mMol/l, das Verhältnis Cr zu Ti 1:1 bis 1:10, vorzugsweise 1:1 bis 1:6. Die Reaktionstemperature beträgt 0 bis 100°C, vorzugsweise 20 bis 70°C, die Reaktionszeit 0,5 bis 80 Stunden, vorzugsweise 0,5 bis 24 Stunden. Während der Umsetzung färbt sich das ursprünglich braune Trägermaterial grün.

Die so erhaltene Katalysatorkomponente A wird entweder in Form der Suspension direkt, oder nach Entfernung des Verdünnungsmittels und Trocknung eingesetzt.

Als Komponents B werden aluminiumorganische Verbindungen eingesetzt.

Vorteilhaft werden als Komponente B Aluminiumtrialkyle der Formel $AlR^5_3$ oder Aluminiumdialkylhydride der Formel $AlR^5_2H$ eingesetzt, in denen $R^5$ einen Kohlenwasserstoffrest mit 1 bis 16 Kohlenstoffatomen, vorzugsweise einen Alkylrest mit 1 bis 16, insbesondere 2 bis 4 Kohlenstoffatomen bedeutet, wie $Al(C_2H_5)_3$, $Al(C_2H_5)_2H$, $Al(C_3H_7)_2H$, $Al(i\text{-}C_4H_9)_3$, $Al(i\text{-}C_4H_9)_2H$.

Verwendet werden können auch polymere aluminiumorganische Verbindungen, die aus Einheiten der Formel

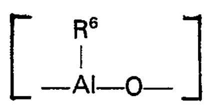

bestehen, worin $R^6$ eine Alkylgruppe mit 2 bis 12, vorzugsweise 2 bis 6 Kohlenstoffatomen bedeutet, z.B. Methyl-, Ethyl-, Propyl-, Isopropyl-, Butyl-, Isobutyl-, Pentyl-, Hexyl-, Isooctyl-, Dodecyl-. Diese Verbindungen sind erhältlich aus den entsprechenden Aluminiumtrialkylen, -dialkylhydriden und -alkyldihydriden durch vorsichtige Zugabe einer berechneten Menge Wasser zu deren Lösung in einem inerten Lösungsmittel, beispielsweise den gleichen, die vorstehend beschrieben wurden. Dabei beträgt das Molverhältnis Wasser zu Aluminiumalkyl 0,5:1 bis 1,25:1, vorzugsweise 0,85:1 bis 1,05:1, die Reaktionstemperature beträgt 0° bis 100°C, vorzugsweise etwa 10° bis 65°C. Die entsprechenden Alkylaluminiumoxide sind polymer. Bevorzugt verwendet werden von dieser Verbindungsklasse diejenigen Verbindungen, die durch Reaktion von Aluminiumtriisobutyl mit Wasser im Verhältnis 1:1 entstehen.

Weiterhin eignen sich als Komponent B chlorhaltige aluminiumorganische Verbindungen wie Dialkylaluminiummonochloride der Formel $R^5_2AlCl$ oder Alkylaluminiumsesquichloride der Formel $R^5_3Al_2Cl_3$, worin $R^5$ einen Kohlenwasserstoffrest mit 1 bis 16 Kohlenstoffatomen, vorzugsweise einen Alkylrest mit 1 bis 16, insbesondere 2 bis 4 Kohlenstoffatomen bedeutet. Als Beispiele seien genannt:

$$(C_2H_5)_2AlCl,\ (i\text{-}C_4H_9)_2AlCl,\ (C_2H_5)_3Al_2Cl_3.$$

Geeignete aluminiumorganische Verbindungen sind auch die Umsetzungsprodukte von Aluminiumtrialkylen oder Aluminiumdialkylhydriden, die Alkylreste mit 1 bis 16 Kohlenstoffatomen enthalten, mit 4 bis 20 Kohlenstoffatomen enthaltenden Dienen.

Von allen genannten aluminiumorganischen Verbindungen werden bevorzugt verwendet die polymeren Alkylaluminiumoxide.

Mit dem erfindungsgemäßen Katalysator wird mindestens ein 1-Olefin der Formel $R^7—CH=CH_2$ polymerisiert, worin $R^7$ Wasserstoff oder einen geradkettigen oder verzweigten Alkylrest mit 1 bis 10, vorzugsweise 1 bis 8 Kohlenstoffatomen, bedeutet. Beispielsweise seien Ethylen, Propylen, Buten-(1), Hexen-(1), 4-Methylpenten-(1), Octen-(1) genannt. Vorzugsweise wird Ethylen allein oder als Gemisch von mindestens 70 Gewichtsprozent Ethylen und maximal 30 Gewichtsprozent eines anderen 1-Olefins der obigen Formel polymerisiert. Insbesondere wird Ethylen allein oder ein Gemisch von mindestens 92 Gewichtsprozent Ethylen und maximal 8 Gewichtsprozent eines anderen 1-Olefins der obigen Formel polymerisiert.

Das Molekulargewicht des Polymers wird in bekannter Weise geregelt; vorzugsweise wird dazu Wasserstoff verwendet.

Die Polymerisation wird in Lösung, in Suspension oder in der Gasphase, kontinuierlich oder diskontinuierlich, bei einer Temperature von 20 bis 150°C, vorzugsweise 60 bis 140°C, durchgeführt. Der Druck beträgt 0,5 bis 50 bar. Bevorzugt ist die Polymerisation in dem technisch besonders interessanten Druckbereich von 1 bis 40 bar.

Dabei wird die Chromverbindung (Komponente A) in einer Konzentration von 0,001 bis 1,5, vorzugsweise 0,005 bis 0,1 mMol (bezogen auf Cr) pro Liter Dispergiermittel bzw. Reaktorvolumen angewendet. Die metallorganische Verbindung (Komponente B) wird in einer Konzentration von 0,05 bis 15 mMol, vorzugsweise 0,5 bis 10 mMol pro Liter Dispergiermittel pro Liter Reaktorvolumen verwendet. Prinzipiell sind aber auch höhere Konzentrationen möglich.

Die Suspensions- oder Lösungspolymerisation wird in einem der für das Ziegler-Niederdruckverfahren gebräuchlichen inerten Lösungsmittel durchgeführt, wie sie bereits weiter oben beschrieben wurden.

Das erfindungsgemäße Verfahren zur Herstellung eines Katalysators besitzt den besonderen Vorteil, daß keine überschüssigen Metallverbindungen durch Waschen aus der Katalysatorkomponente A zu entfernen sind, da sowohl die eingesetzte Chromverbindung als auch die Titan-(IV)-verbindung vollständig mit dem Trägermaterial reagieren. Somit fallen auch keine Waschflüssigkeiten an, aus denen die Metallverbindugen vor der Aufbereitung zunächst abgetrennt werden müssen. Demzufolge entstehen auch keine metallhaltigen Abwässer oder Schlämme.

Der erfindungsgemäße Katalysator liefert ein Polymeres mit breiter Molekulargewichtsverteilung in hoher Ausbeute. Da die Polymeren arm an hochmolekularen Bestandteilen sind, liefern sie Folien, die praktisch stippenfrei sind. Weiterhin sind die Polymeren äußerst lichtbeständig.

Ein weiterer Vorteil des erfindungsgemäßen Katalysators besteht darin, daß durch die Behandlung des auf den Träger fixierten Chromatesters mit dem Titanester in Abwesenheit eines ungesättigten polymerisierbaren Kohlenwasserstoffs die Ansprechbarkeit des System für Wasserstoff sehr stark erhöht wird und dadurch die Herstellung von gut verarbeitbaren Polymeren erleichtert wird.

Beispiel 1

In eine Lösung von 0,2964 g (4 mMol) t-Butanol in 150 ml wasserfreiem Hexan werden bei 20°C unter Ausschluß von Luft und Feuchtigkeit 3 g wasserfreies Magnesiumsulfat und danach 0,5 g (5 mMol) $CrO_3$ unter Rühren eingetragen. Anschließend rührt man die Suspension noch 20 min bei 20°C und filtriert sie sodann unter Schutzgasatmosphäre. Die rote Lösung von t-Butylchromat wird ohne weitere Reinigung für die nachfolgenden Operationen verwendet.

Eine Kieselsäure mit einer spezifischen Oberfläche von etwa 300 $m^2/g$, einem Porenvolumen von 1,65 $cm^3/g$ und einer mittleren Teilchengröße von 100 $\mu m$ wird 4 h in einem Wirbelbett unter Argon bei 460°C getrocknet und unter Argon aufbewahrt. 26 g dieser Kieselsäure werden bei 20°C in 100 ml Hexan suspendiert und mit der Lösung von 2 mMol t-Butylchromat in 150 ml Hexan unter Rühren und Inertgasüberlagerung versetzt. Sodann werden 10 mMol $(Ti(i-C_3H_7)_4)$ zugefügt und das Gemisch 24 h bei 20°C stehen gelassen. Danach dampft man den Ansatz in einem Vakuum-Rotationsverdampfer zur Trockne.

Die nunmehr vorliegende Katalysatorkomponente A wird in Form eines Pulvers zur Polymerisation von Ethylen verwendet.

Ein 200 l Kessel wird mit 100 l einer hydrierten Dieselölfraktion (Kp 130 bis 170°C) beschickt und durch Spülen mit Stickstoff die Luft entfernt. Darauf heizt man auf 85°C. Sodann wird die Komponente A in Form des vorgenannten Pulvers und 1 mMol Poly-i-butyl-aluminiumoxid eingeführt. Man leitet Ethylen ein und soviel Wasserstoff, daß dessen Partialdruck im Gasraum 5% bei einem Gesamtdruck von 6 bar beträgt. Der Druck wird durch weiteres Einleiten von Ethylen aufrechterhalten. Nach 8-stündiger Polymerisation bei 85°C erhält man 38 kg Polyethylen, was einer Ausbeute von 2380 g Polymer/mMol Cr·h entspricht.

| | |
|---|---|
| RSV | 5,01 dl/g |
| MFI 190/5 | 0,13 g/10 min |
| MFI 190/15 | 1,5/10 min |
| $\frac{\text{MFI 190/15}}{\text{MFI 190/5}}$ = | 11,4 |
| $\overline{M}w/\overline{M}n$ = | 20,5 |

Beispiel 2

Beispiel 1 wird wiederholt, jedoch läßt man 2 mMol t-Butylchromat auf 24 g der Kieselsäure aufziehen. Danach versetzt man die Suspension mit 10 mMol $Ti(O\text{-}i\text{-}C_3H_7)_4$ und kocht 1 Stunde unter Rückfluß.

Bei der Polymerisation im 200 l Kessel entsprechend Beispiel 1 erreicht man einen Gesamtdruck von 7 bar bei einem $H_2$-Anteil von 5% im Gasraum. Nach 8-stündiger Polymerisation erhält man 31,84 kg Polyethylen, entsprechend einer Ausbeute von 1990 g PE/mMol Cr·h.

| | |
|---|---|
| RSV | 5,09 dl/g |
| MFI 190/5 | 0,15 g/10 min |
| MFI 190/15 | 20 g/10 min |

**Patentansprüche**

1. Verfahren zur Herstellung eines Katalysators durch Aufbringen eines Chromatesters auf ein Oxid oder Mischoxid des Siliciums und/oder Aluminiums und Mischen des Reaktionsproduktes (Komponente A) mit einer aluminiumorganischen Verbindung (Komponente B), dadurch gekennzeichnet, daß man zur Herstellung der Komponente A einen Chromatester der Formel

$$(RO)_2CrO_2,$$

worin R eine tertiäre Alkyl- oder Aralkylgruppe mit 4 bis 24 Kohlenstoffatomen bedeutet, auf ein Oxid oder Mischoxid des Siliciums und/oder Aluminiums aufbringt und in Abwesenheit eines ungesättigten polymerisierbaren Kohlenwasserstoffes mit einer Titanverbindung der Formel

$$Ti(OR^4)_4,$$

worin $R^4$ einen geradkettigen oder verzweigten Alkylrest mit 1 bis 12 Kohlenstoffatomen bedeutet, im Verhältnis Cr:Ti von 1:1 bis 1:10 behandelt.

2. Verwendung des Katalysators, hergestellt nach dem Verfahren gemäß Anspruch 1, zum Polymerisieren von 1-Olefinen der Formel $R^7{-}CH{=}CH_2$, worin $R^7$ Wasserstoff oder einen geradkettigen oder verzweigten Alkylrest mit 1 bis 10 Kohlenstoffatomen bedeutet.

3. Verfahren zur Herstellung eines Polyolefins durch Polymerisieren von mindestens einem 1-Olefin der Formel $R^7{-}CH{=}CH_2$, worin $R^7$ Wasserstoff oder einen geradkettigen oder verzweigten Alkylrest mit 1 bis 10 Kohlenstoffatomen bedeutet, in Gegenwart eines Katalysators, welcher entstanden ist durch Aufbringen eines Chromatesters auf einen Siliciumdioxid enthaltenden Träger und Mischen des Reaktionsproduktes (Komponente A) mit einer aluminiumorganischen Verbindung (Komponente B), dadurch gekennzeichnet, daß man die Polymerisation in Gegenwart eines Katalysators durchführt, dessen Komponents A in der Weise hergestellt wurde, daß man einen Chromatester der Formel

$$(RO)_2CrO_2,$$

worin R eine tertiäre Alkyl- oder Aralkylgruppe mit 4 bis 24 Kohlenstoffatomen bedeutet, auf ein Oxid oder Mischoxid des Siliciums und/oder Aluminiums aufbrachte und in Abwesenheit eines ungesättigten polymerisierbaren Kohlenwasserstoffes mit einer Titanverbindung der Formel

$$Ti(OR^4)_4,$$

worin $R^4$ einen geradkettigen oder verzweigten Alkylrest mit 1 bis 12 Kohlenstoffatomen bedeutet, im Verhältnis Cr:Ti von 1:1 bis 1:10 behandelte.

**Revendications**

1. Procédé de préparation d'un catalyseur par application d'un ester chromique sur un oxyde ou un oxyde mixte du silicium et/ou de l'aluminium et mélangeage du produit réactionnel (composante A) avec un composé organo-aluminique (composante B), procédé caractérisé en ce que, pour préparer la composante A, on applique un ester chromique répondant à la formule:

$$(RO)_2CrO_2$$

dans laquelle R représente un radical alkyle ou aralkyle tertiaire contenant de 4 à 24 atomes de carbone, sur un oxyde ou oxyde mixte du silicium et/ou de l'aluminium, et on traite, en l'absence d'un hydrocarbure insaturé polymérisable, par un composé du titane répondant à la formule:

$$Ti(OR^4)_4$$

dans laquelle $R^4$ représente un radical alkyle, linéaire ou ramifié, contenant de 1 à 12 atomes de carbone, dans un rapport molaire de Cr à Ti compris entre 1:1 et 1:10.

2. Application du catalyseur préparé par le procédé de la revendication 1 à la polymérisation d'$\alpha$-oléfines répondant à la formule $R^7—CH=CH_2$ dans laquelle $R^7$ représente l'hydrogène ou un radical alkyle, linéaire ou ramifié, contenant de 1 à 10 atomes de carbone.

3. Procédé de préparation d'une poly-oléfine par polymérisation d'au moins une $\alpha$-oléfine répondant à la formule $R^7—CH=CH_2$ dans laquelle $R^7$ représente l'hydrogène ou un radical alkyle, linéaire ou ramifié, contenant de 1 à 10 atomes de carbone, en présence d'un catalyseur qui a été formé par application d'un ester chromique sur un support contenant de la silice et mélangeage du produit réactionnel (composante A) avec un composé organo-aluminique (composante B), procédé caractérisé en ce qu'on effectue la polymérisation en présence d'un catalyseur dont on a préparé la composante A en appliquant un ester chromique répondant à la formule:

$$(RO)_2CrO_2$$

dans laquelle R représente un radial alkyle ou aralkyle tertiaire contenant de 4 à 24 atomes de carbone, sur un oxyde ou un oxyde mixte du silicium et/ou de l'aluminium, et en traitant, en l'absence d'un hydrocarbure insaturé polymérisable, par un composé du titane répondant à la formule:

$$Ti(OR^4)_4$$

dans laquelle $R^4$ représente un radical alkyle, linéaire ou ramifié, contenant de 1 à 12 atomes de carbone, dans un rapport de Cr à Ti compris entre 1:1 et 1:10.

**Claims**

1. A process for the manufacture of a catalyst by applying a chromate ester to an oxid or mixed oxide of silicon and/or aluminum and mixing the reaction product obtained (component A) with an aluminum-organic compound (component B), wherein component A is prepared by applying a chromate ester of the formula

$$(RO)_2CrCO_2,$$

in which R denotes a tertiary alkyl or aralkyl group having from 4 to 24 carbon atoms, on an oxide or mixed oxide of silicon and/or aluminum and treating the carrier with the applied chromate ester, in the absence of an unsaturated polymerizable hydrocarbon, with a titanium compound of the formula

$$Ti(OR^4)_4,$$

in which $R^4$ denotes a linear or branched alkyl group having from 1 to 12 carbon atoms, in a proportion of Cr to Ti of from 1:1 to 1:10.

2. The use of the catalyst prepared by the process claimed in claim 1 for polymerizing 1-olefins of the formula $R^7—CH=CH_2$, in which $R^7$ denotes hydrogen or linear or branched $C_1$-$C_{10}$alkyl.

3. A process for the manufacture of a polyolefin by polymerizing at least one 1-olefin of the formula $R^7—CH=CH_2$ in which $R^7$ denotes hydrogen or linear or branched $C_1$-$C_{10}$alkyl in the presence of a catalyst prepared by applying a chromate ester to a carrier containing silicon dioxide and mixing the reaction product obtained (component A) with an aluminum-organic compound (component B), which comprises carrying out the polymerization in the presence of a catalyst component A of which is

prepared by applying a chromate ester of the formula

$$(RO)_2CrO_2,$$

in which R denotes a tertiary alkyl or aralkyl group having from 4 to 24 carbon atoms, on an oxide or mixed oxide of silicon and/or aluminum and treating the carrier with the applied chromate ester, in the absence of an unsaturated polymerizable hydrocarbon, with a titanium compound of the formula

$$Ti(OR^4)_4,$$

in which $R^4$ denotes a linear or branched alkyl group having from 1 to 12 carbon atoms, in a proportion of Cr to Ti of from 1:1 to 1:10.